# EUROPEAN PATENT SPECIFICATION

(11) **EP 1 268 073 B1**
(45) Date of publication and mention of the grant of the patent: **03.09.2008**
(21) Application number: 01911989.0
(22) Date of filing: 20.03.2001
(51) Int. Cl.: B02C 19/00

(54) **APPARATUS FOR CRUSHING GLASS OR CERAMIC MATERIAL**
VORRICHTUNG ZUM ZERBRECHEN VON GLAS ODER KERAMISCHEN MATERIAL
MACHINE A BROYER DU VERRE OU DE LA CERAMIQUE

(30) Priority: 22.03.2000 GB 0006976; 29.11.2000 GB 0029213
(43) Date of publication of application: 02.01.2003
(73) Proprietor: Global Eneco Limited, Southampton SO31 5FJ (GB)
(72) Inventor: WHETTINGSTEEL, Stephen, Southampton SO31 5FJ (GB)
(74) Representative: Jones, Graham Henry
(86) International application number: PCT/GB2001/001216
(87) International publication number: WO 2001/070408

(56) References cited:
- EP-A- 0 865 826
- EP-A- 0 990 466
- WO-A-96/23587
- DE-A- 4 427 462
- FR-A- 2 698 024
- US-A- 5 215 265
- US-A- 5 484 109
- US-A- 5 505 390
- US-A- 5 938 132
- US-A- 6 073 866

## Description

This invention relates to apparatus for crushing glass or ceramic material.

The disposal of glass and ceramic material presents problems. More specifically, apparatus for crushing glass is known. The known apparatus crushes the glass with a view to reducing the volume occupied by the glass so that the glass can then be more easily handled. The crushed glass contains very sharp fragments which make the glass dangerous to handle. This in turn severely restricts any possible further use to which the glass fragments can be put. Currently, commercial uses for crushed glass are limited to asphalt grog for roads, and shot blasting media in small volumes. The vast majority of the crushed glass is simply disposed of as a land fill waste material. Such disposal of the crushed glass is not especially ecologically friendly, and the land fill sites must be such that the crushed glass is buried sufficiently deeply that its sharp edges cannot harm human and animals. Also, there are collection costs for collecting the crushed glass prior to disposal.

Ceramic material may also need to be crushed with a view to reducing the volume occupied by the ceramic material so that the ceramic material can then be more easily handled. If the ceramic material is glazed, the crushed ceramic material may contain sharp fragments, which then gives rise to the same type of problems as those mentioned above for glass. Some ceramic material is not glazed, but it is often not economically possible to separate glazed and non-glazed ceramic material.

US-A-5,484,109 discloses apparatus for shearing glass refuse such as bottles. The apparatus comprises a rectangular housing having an inlet chute for loading the glass, a popper mechanism for initial breaking of the glass, a breaker mechanism which is positioned underneath the popper mechanism and which is for shearing the glass from the popper mechanism into smaller pieces, and a shearer mechanism which is positioned underneath the breaker mechanism and which is for shearing the glass pieces from the breaker mechanism into glass aggregate. The breaker mechanism includes a rotor, rotor blades attached to the rotor, and stationary blades. The breaker mechanism only shears the glass from the popper mechanism into smaller pieces. The shearer mechanism is the part of the apparatus that produces the glass aggregate.

It is an aim of the present invention to obviate or reduce the above mentioned problems associated with the disposal of glass and ceramic material.

Accordingly, the present invention provides apparatus for crushing glass or ceramic material, which apparatus comprises a rotor, rotor blades which are attached to the rotor, at least one stationary blade which cooperates in use with the rotor blades as the rotor rotates, a chamber for receiving crushed glass or ceramic material, and feed means for feeding the glass or ceramic material to the rotor, the apparatus being such that the rotor is upstream of the chamber, and the apparatus being such that in use the rotor rotates at 1200 - 2800 revolutions per minute, the feed means feeds the glass or ceramic material to the rotor at a feed speed of 3 - 75 metres per second, the feed means feeds the glass or ceramic material to the rotor such that the glass or ceramic material falls onto the rotor blades as the rotor blades are moving upwardly towards the falling glass or ceramic material whereby the glass or ceramic material is broken into fragments on impact with the rotor blades, the fragments are reduced in size and formed into cullet by passing through a gap between the rotor blades and the stationary blade, the rotor blades are attached to the rotor such that the rotor blades do not move with respect to the rotor whereby the gap is a fixed gap irrespective of rotational speed of the rotor, the rotor blades extend lengthwise of the rotor and at spaced apart angular intervals, and the gap, the rotor blades and the stationary blade cause the cullet to be such that it will not cut, is safe for handling, and is suitable for further use without further processing.

The apparatus of the present invention is extremely advantageous in that the produced cullet does not have sharp edges. The cullet can be safely handled without fear of persons or animals being cut. Thus the cullet can immediately be used for a wide variety of purposes and there is no need for the cullet to be used as a land fill waste material. The cullet of the present invention may be used instead of sand on golf greens as a drainage material which allows water to pass through the drainage material. The cullet may also be used as an in-fill material for drainage ditches. The cullet may still further be used as decorative finishes in horticulture, and also as a slug repellant material. Generally, the cullet may be used for a wide variety of purposes, and with the advantage that the cullet is a cheap material that would otherwise have just gone to waste.

As indicated above, the rotor is rotated at 1200-2800 revolutions per minute, and the glass or ceramic material is fed to the rotor at a feed speed of 3-75 metres per second. Such rotational speeds for the rotor and such feed speeds for the glass or ceramic material help to produce the required cullet. The rotor may be rotated at 1550 revolutions per minute, and the feed speed may be 3 metres per second.

The apparatus will usually be one in which the rotor is positioned above the chamber. The rotor may however be positioned elsewhere if desired. Preferably, the rotor blades are spaced apart at 90° angular intervals.

Preferably, the stationary blade is an adjustable stationary blade for the purpose of adjusting the gap between the rotor blades and the stationary blade in order to vary the size of the cullet. Cullet of different sizes may have different further uses. For example, cullet for use in place of sand on golf greens will generally be of a smaller particle size than cullet for use in drainage ditches.

The apparatus of the invention may include retention seals for retaining dust in the chamber. The dust is formed as a result of the crushing of the glass or the ceramic material. The dust is generally formed of silica in the case of crushing glass. The retention seals may be located around a drive shaft for the rotor.

The apparatus of the present invention may also include drive means for the rotor. The drive means may be hydraulic, electrical, electro-mechanical, belt drive or gear drive. Any suitable and appropriate type of drive means may be employed.

The apparatus of the present invention may include a feed chute along which the glass or ceramic material passes for correct presentation to the rotor. In one embodiment of the present invention, the feed chute is an elbow feed chute. Such a feed chute may be designed for the manual feeding of bottles and it is preferably designed such that a person cannot put their arm so far into the feed chute that the rotor can be engaged.

Preferably, the feed chute includes a lining for preventing erosion of the feed chute adjacent the rotor. The lining is thus able to deal with the effects of the imploding glass or ceramic material in the region of the feed chute adjacent the rotor. Preferably, the lining is a ceramic lining, a composite lining, or a wear-resistant steel lining. Other types of lining may however be employed.

Depending upon the type of construction of the apparatus, the feeding of the glass or ceramic material to the rotor by the feed means may be by gravity feeding or force feeding. The gravity feeding can be done manually. The force feeding can be done by a conveyor or a bucket on a vehicle such as a tractor.

The apparatus of the present invention may include cullet grading means for grading the cullet into different predetermined particle sizes for different predetermined further uses.

The cullet grading means may be a rotary screening device, or a vibration screening device. Other types of cullet grading means may be employed.

The apparatus of the present invention may include filter means for removing dust from the apparatus. The dust will usually be silica dust in the case of glass being crushed by the apparatus.

The filter means may remove the dust firstly at a base part of the crushing chamber, and secondly at the grading screens when grading screens are employed.

The apparatus may include conveyor means for conveying the graded cullet to a storage container.

The apparatus may include re-circulating means for re-circulating graded cullet of a certain particle size for re-processing into cullet of a smaller particle size.

The apparatus may include filter means for filtering any fluid contained in the glass or ceramic material prior to crushing, the filter means being such as to separate contaminates from water whereby the water can be freely discharged to waste. For example, the glass initially delivered to the apparatus of the present invention may be in the form of bottles containing contaminates such for example as alcohol or oil. Such contaminants cannot be discharged down normal local drainage systems and so they need to be separated. By separating them from the water, the water can be discharged and only the relatively small volumes of contaminants need to be retained for specialised disposal.

The apparatus may include a pre-breaking device for breaking up large pieces of glass or ceramic material before the glass or ceramic material is introduced to the remainder of the apparatus for crushing. The use of the pre-breaking device is advantageous where the glass or ceramic material is initially in the form of large sheets which are oversize for feeding to the rotor.

The pre-breaking device may be a crusher or a shredder. Other types of pre-breaking device may be employed.

The apparatus may include a ferrous/non-ferrous separator located at the pre-breaking part of the apparatus.

The apparatus of the invention may be constructed to be mobile if it is desired to take the apparatus to various sites. Alternatively, the apparatus may be constructed to be stationary in which case the glass or ceramic material has to be brought to the apparatus. Where the apparatus is constructed to be mobile, the apparatus may include coupling means for coupling the apparatus to a vehicle, thereby allowing for easy use of the apparatus in more isolated areas.

The apparatus may be one in which there is one of the rotors for each one of the chambers. Alternatively, the apparatus may be one in which there are two or more of the rotors for each one of the chambers. The number of rotors is chosen to give the required crushing surface between rotor blades and stationary blade.

The apparatus may include a cleaning stationary blade which operates to clean the rotor blades with a scraping action as the rotor rotates.

The apparatus may include a post process drier for drying the cullet.

The apparatus of the present invention is able to operate with glass or ceramic material of a wide variety of types, shapes and sizes. Thus, for example, the glass may be in the form of bottles, jars, windscreen glass, laminate glass, plate glass and window glass.

Embodiments of the invention will now be described solely by way of example and with reference to the accompanying drawings in which:
Figure 1 shows schematically first apparatus for crushing glass;
Figure 2 shows in detail part of the first design of apparatus for crushing glass;
Figure 3 shows a chamber and stationary blade part of the apparatus shown in Figure 2;
Figure 4 is an exploded view of a rotor and rotor blades as employed in Figure 2;
Figure 5 shows second apparatus of the invention;
Figure 6 is a side view of third apparatus of the invention; and
Figure 7 is a top view of the apparatus shown in Figure 6.

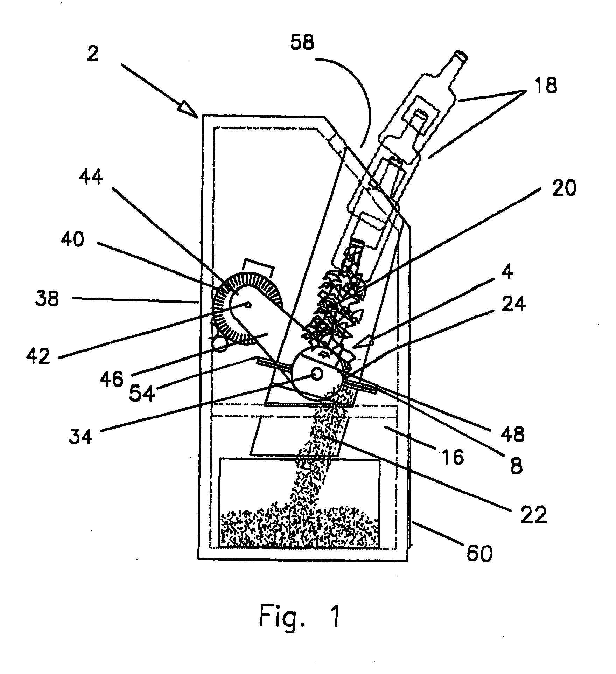

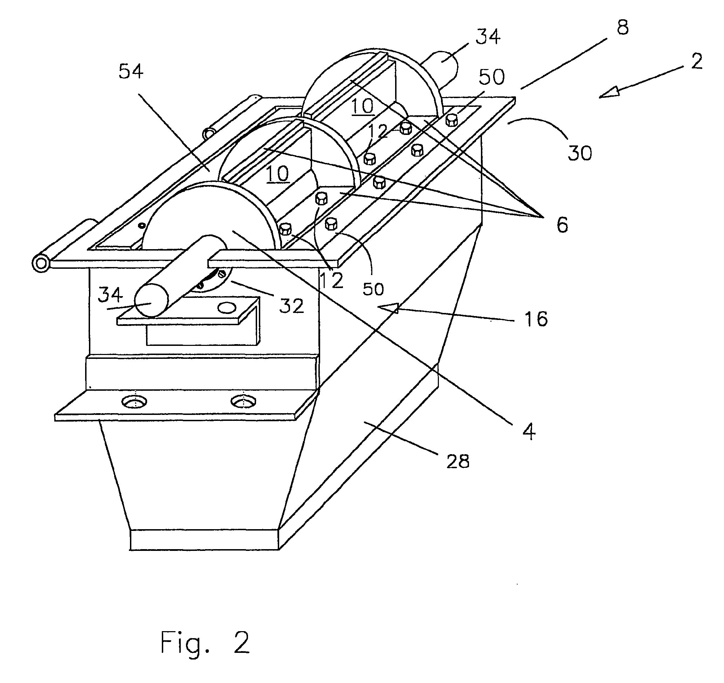

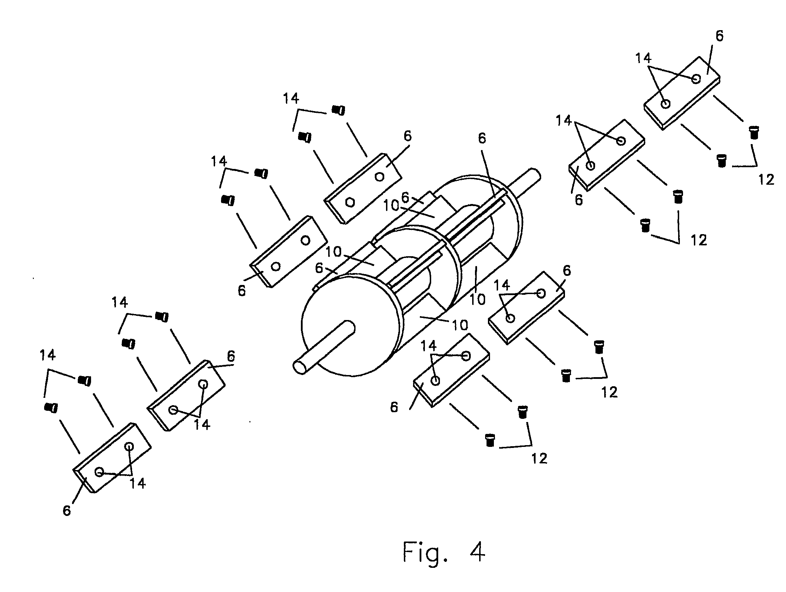

Referring to Figures 1 - 4, there is shown first apparatus 2 for crushing glass. The apparatus 2 comprises a rotor 4, rotor blades 6 on the rotor, and a stationary blade 8 which co-operates in use with the rotor blades 6 as the rotor 4 rotates . As can be seen from Figures 2 and 4, the rotor blades 6 are separately formed from the rotor 4 and they are secured to mounting portions 10 of the rotor 4 by bolts 12 which pass through holes 14 in the rotor blades 6. The bolts 12 may alternatively be clamps (not shown).

The apparatus 2 also comprises a chamber 16 for receiving crushed glass. As can be seen from Figures 1 and 2, the rotor 4 is upstream of the chamber 16 by being mounted above the chamber 16.

As can be seen from Figure 1, glass in the form of bottles 18 is fed to the apparatus 2. The glass in the form of the bottles 18 is first broken into fragments 20 on impact with the rotor 4. The glass fragments 20 are then reduced in size and formed into cullet 22 by passing through a gap 24 between the rotor blades 6 and the stationary blade 8. The gap 24, the rotor blades 6 and the stationary blade 8 cause the cullet 22 to be such that it will not cut, is safe for handling, and is suitable for further use without further processing.

During use of the apparatus 2, the rotor 4 rotates at 1750 revolutions per minute. Bottles 18 are fed to the rotor at a feed speed of 60 metres per second. The glass bottles 18 can be fed manually or automatically. As can be seen from Figure 1, the glass bottles enter the apparatus 2 and are directed towards the rotor 4 by a chute 26. The glass bottles 18 fall under gravity down the chute 26 until they strike the rotor 4 whereupon they implode. The imploded glass fragments drop down on to the rotor 4 and pass through the gap 24 where they are further reduced in size to the cullet 22.

The stationary blade 8 is an adjustable stationary blade 8. Thus the size of the cullet 22 is able to be controlled by moving the stationary blade 8 towards or away from the rotor blades 6 in order to vary the size of the gap 24. By appropriately varying the size of the gap 24, the cullet 22 is able to be reduced in size right down to a powder if desired.

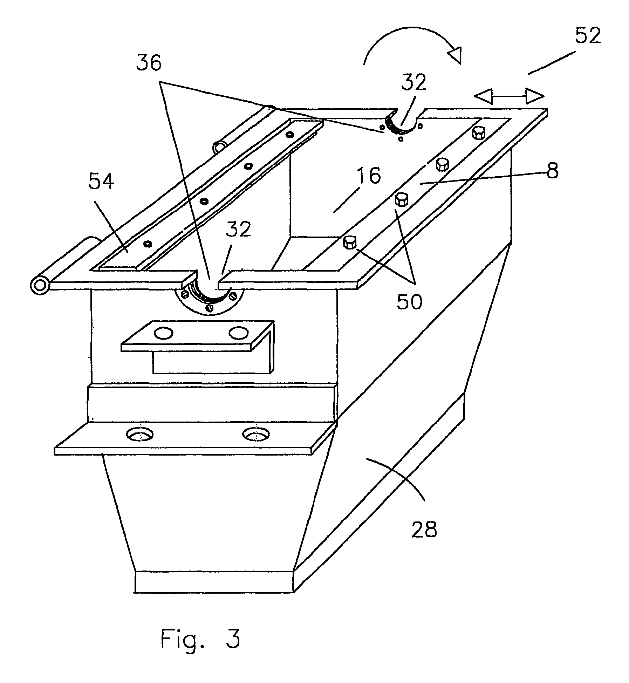

As shown in Figures 2 and 3, the chamber 16 is in a housing 28. The housing 28 has an upper edge 30 and a pair of recesses 32 in the upper edge 30. The recesses 32 receive a shaft 34 of the rotor 4. The recesses 32 are provided with retention seals 36 for retaining dust from the cullet 22 in the chamber 16. Without the retention seals 36, the dust could escape from the chamber 32 through the recesses 32 and along the side of the shaft 34.

As shown in Figure 1, the apparatus 2 includes drive means 38 for driving the rotor 4. The drive means 38 comprises an electric motor 40 having a drive shaft 42. The drive shaft 42 supports a pulley 44 which drives an endless belt 46. The endless belt 46 drives a pulley 48 which is mounted on the shaft 34 of the rotor 4. Thus rotation of the pulley 48 via the endless belt 46, the pulley 44 and the electric motor 40 causes rotation of the rotor 4.

As shown in Figures 2 and 3, the stationary blade 8 is held in position by bolts 50. Adjustment of the stationary blade 8 is effected by releasing the bolts 50, adjusting the stationary blade 8 to the required position, and then re-tightening the bolts 50. This adjustment movement is illustrated by arrow 52 in Figure 3.

As can be seen from Figures 2 and 3, the apparatus 2 is provided with a cleaning stationary blade 54 which operates to clean the rotor blades 8 with a scraping action as the rotor 4 rotates. The cleaning stationary blade 54 helps to remove glass fragments from the edges of the rotor blades 6, and thereby helps to make sure that the balance of the rotor is maintained. The rotor blades 6 are then able to act more efficiently in grinding the glass fragments 20 to remove sharp edges from the glass fragments 20 so that the cullet 22 can be handled safely without fear of persons or animals being cut by the cullet 22.

The chute 26 is provided with a lining (not shown) adjacent the rotor 4. The imploding glass has a tendency to erode the chute 26 and the lining helps to prevent this erosion. The lining may be a ceramic lining, a composite lining, or a wear-resistant steel lining.

As can be seen from Figure 1, the entire apparatus 2 is in a cabinet 56 which can be free-standing and which is arranged for receiving the bottles 18 manually through an opening 58. The bottom of the cabinet 56 may be provided with a pull-out drawer 60 which is pulled out when full and which contains the cullet 22.

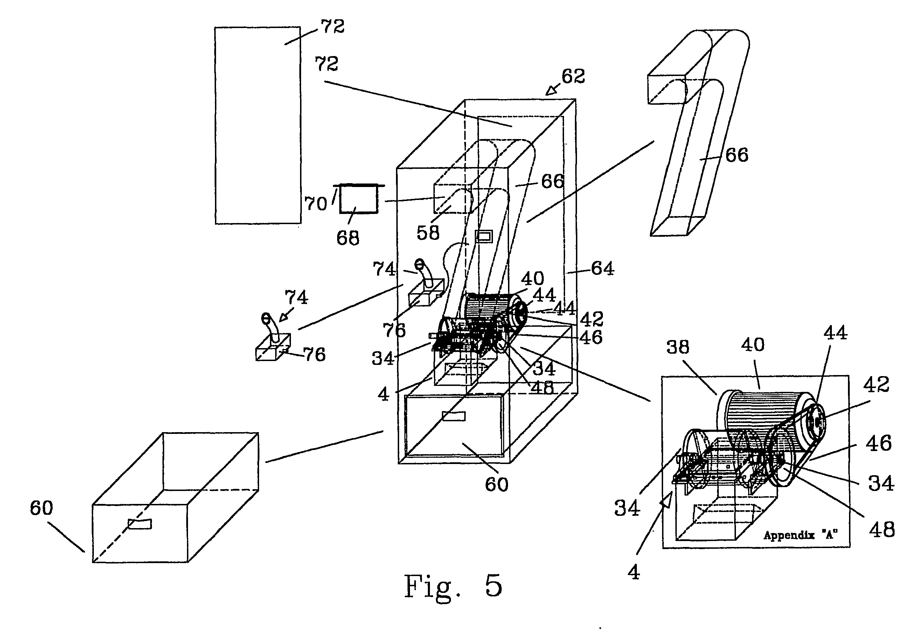

Figure 5 shows second apparatus 62 having a cabinet 64 which is similar to the cabinet 56. The apparatus 62 has a chute 66 which is curved as shown, instead of the straight chute 26 shown in Figure 1. The chute 66 is an elbow feed chute. The design of the chute 66 is such as to prevent a person being able to insert their arm sufficiently far down the chute 66 to engage the rotor 4. Similar parts in Figures 1 and 5 have been given the same reference numerals for ease of comparison and understanding.

The chute 66 is provided with a door 68 which covers the opening 58 to the chute 66. The door 68 pivots about a pivot bar 70 and is spring biased by a spring (not shown) to the closed position.

The cabinet 64 has a removable rear door 72 for enabling access to the components of the apparatus 62 inside the cabinet 64.

The apparatus 62 is also provided with cleaning means 74. The cleaning means 74 comprises a tank 76 for containing chemicals. A pump (not shown) is able to pump chemicals for cleaning and disinfecting the chute 66. The cleaning means 74 is automatically controlled by timed electrical control means (not shown).

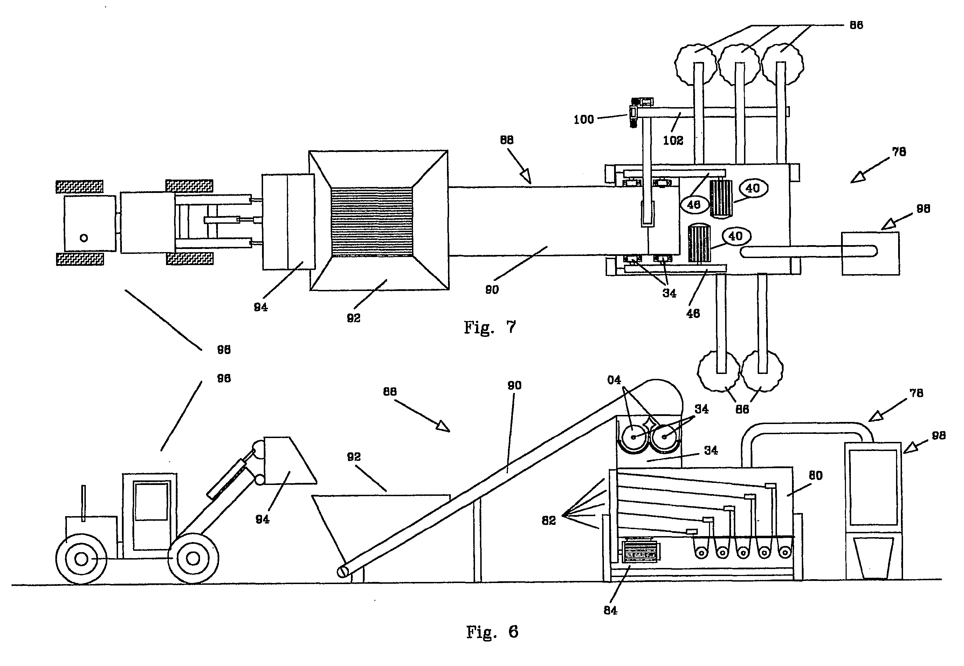

Referring now to Figures 6 and 7, there is shown third apparatus 78 of the invention.

The apparatus 78 includes two of the rotors 4. The rotors 4 are powered by two electric motors 40 and endless belts 46.

The rotors grind glass fragments 20 into cullet 22 as described above so that the cullet 22 falls into a chamber 16. Cullet from the chamber 16 is able to be graded by cullet grading means 80. The cullet grading means 80 comprises a plurality of different grading screens 82 for grading the cullet 22 into different pre-determined particle sizes for different pre-determined uses. The grading screens 82 are vibrated by vibration means including an electric motor 84. The graded cullet is collected in sacks 86.

The apparatus 78 includes feed means 88 for feeding the glass to the rotor. The feed means 88 comprises a conveyor 90 which is fed with the glass from a feed hopper 92. Glass is fed to the feed hopper 92 via a bucket 94 on a tractor 96 which performs the function of a mechanical shovel.

The apparatus 78 includes filter means 98 for removing dust from the cullet 22. If desired, the filter means 98 may remove dust firstly at a base part of the chamber 16, and secondly at the grading screens 82 as shown in Figures 6 and 7.

The apparatus 78 includes re-circulating means 100 as shown in Figure 7. The re-circulating means 100 includes a re-circulating conveyor 102. The re-circulating means 100 is able to re-circulate graded cullet of a certain particle size for re-processing into cullet of a small particle size.

It is to be appreciated that the embodiments of the invention described above with reference to the accompanying drawings have been given by way of example only and that modifications may be effected. Thus, for example, the apparatus of the invention may include fluid filter means for filtering any fluid contained in the glass prior to crushing, the fluid filter means being such as to separate contaminants from water whereby the water can be freely discharged to waste. The apparatus of the invention may also include a pre-breaking device for breaking up large pieces of glass which are too large easily to be handled by the remainder of the apparatus of the invention. For example, the apparatus 78 shown in Figures 6 and 7 may be provided with a pre-breaking device in the form of a crusher or a shredder prior to the feed hopper 92. The apparatus 78 shown in Figures 7 and 8 is basically a stationary apparatus. The apparatus 2 shown in Figures 1 - 4 and the apparatus 62 shown in Figure 5 can be constructed to be stationary or movable as may be desired. The apparatus of the invention may be used for crushing any suitable and appropriate type of glass including bottles, jars, windscreens, laminated glass, plate glass and window glass. The apparatus of the invention may also be used for crushing any suitable and appropriate type of ceramic material.

The apparatus of the invention as shown in the drawings is advantageous in that it enables large amounts of glass and ceramic material which would normally be thrown away as dangerous waste in land-fill sites, to be processed and re-used in a wide variety of applications in complete safety and without the need for further processing.

## Claims

1. Apparatus (2) for crushing glass or ceramic material, which apparatus (2) comprises a rotor (4), rotor blades (6) which are attached to the rotor (4), at least one stationary blade (8) which cooperates in use with the rotor blades (6) as the rotor (4) rotates, a chamber (16) for receiving crushed glass or ceramic material (18), and feed means (88) for feeding the glass or ceramic material (18) to the rotor (4), the apparatus (2) being such that the rotor (4) is upstream of the chamber (16), and the apparatus (2) being such that in use the rotor (4) rotates at 1200 - 2800 revolutions per minute, the feed means (88) feeds the glass or ceramic material (18) to the rotor (4) at a feed speed of 3 - 75 metres per second, the feed means (88) feeds the glass or ceramic material (18) to the rotor (4) such that the glass or ceramic material (18) falls onto the rotor blades (6) as the rotor blades (6) are moving upwardly towards the falling glass or ceramic material (18) whereby the glass or ceramic material (18) is broken into fragments (20) on impact with the rotor blades (6), the fragments (20) are reduced in size and formed into cullet (22) by passing through a gap (24) between the rotor blades (6) and the stationary blade (8), the rotor blades (6) are attached to the rotor (4) such that the rotor blades (6) do not move with respect to the rotor (4) whereby the gap (24) is a fixed gap irrespective of rotational speed of the rotor (4), the rotor blades (6) extend lengthwise of the rotor (4) and at spaced apart angular intervals, and the gap (24), the rotor blades (6) and the stationary blade (8) cause the cullet (22) to be such that it will not cut, is safe for handling, and is suitable for further use without further processing.

2. Apparatus (2) according to claim 1 in which the rotor blades (6) are spaced apart at 90° angular intervals.

3. Apparatus (2) according to claim 1 or claim 2 in which the stationary blade (8) is an adjustable stationary blade (8) for the purpose of adjusting the gap (24) between the rotor blades (6) and the stationary blade (8) in order to vary the size of the cullet (22).

4. Apparatus (2) according to any one of the preceding claims in which the rotor (4) is rotated at 1550 revolutions per minute.

5. Apparatus (2) according to any one of the preceding claims in which the feed speed is 3 metres per second.

6. Apparatus (2) according to any one of the preceding claims and including retention seals (36) for retaining dust in the chamber (16).

7. Apparatus (2) according to any one of the preceding claims and including drive means (38) for the rotor (4).

8. Apparatus (2) according to any one of the preceding claims and including a feed chute (26) along which the glass or ceramic material (18) passes for correct presentation to the rotor (4).

9. Apparatus (2) according to any one of the preceding claims and including re-circulating means (100) for re-circulating graded cullet (22) of a certain particle size for re-processing into cullet (22) of a smaller particle size.

10. Apparatus (2) according to any one of the preceding claims and including a pre-breaking device for breaking up large pieces of glass or ceramic material (18) before the glass or ceramic material (18) is introduced to the remainder of the apparatus (2) for crushing.

11. Apparatus (2) according to any one of the preceding claims and including a cleaning stationary blade (54) which operates to clean the rotor blades (6) with a scraping action as the rotor (4) rotates.

## Patentansprüche

1. Vorrichtung (2) zum Zerbrechen von Glas oder keramischem Material, welche Vorrichtung (2) aufweist einen Rotor (4), Rotorflügel (6), die an dem Rotor (4) angebracht sind, mindestens einen feststehenden Flügel (8), der bei der Benutzung mit den Rotorflügeln (6), während sich der Rotor dreht, zusammenwirkt, eine Kammer (16) um zerbrochenes Glas oder keramisches Material (18) aufzunehmen, und Zuführeinrichtungen (88) um das Glas oder keramische Material (18) dem Rotor (4) zuzuführen, wobei die Vorrichtung (2) derart ist, dass der Rotor (4) stromauf der Kammer (16) liegt, und die Vorrichtung (2) derart ist, dass in Benutzung der Rotor (4) sich mit 1.200 bis 2.800 Umdrehungen pro Minute dreht, die Zuführeinrichtung (88) das Glas oder keramische Material (18) dem Rotor (4) mit einer Zuführgeschwindigkeit von 3-75 m/s zuführt, die Zuführeinrichtung (88) das Glas oder das keramische Material (18) dem Rotor (4) zuführt derart, dass das Glas oder keramische Material (18) auf die Rotorflügel (6) fällt während sich die Rotorflügel (6) nach aufwärts zum fallenden Glas oder keramischen Material (18) hinbewegen, wodurch das Glas oder keramische Material (18) in Teilstücke (20) beim Aufschlag auf die Rotorflügel (6) zerbrochen wird, die Teilstücke (20) in ihrer Größe vermindert werden und in Bruchglas (22) verwandelt werden durch Hindurchgehen durch einen Spalt (24) zwischen den Rotorflügeln (6) und dem feststehenden Flügel (8), die Rotorflügel (6) an dem Rotor (4) derart angebracht sind, dass die Rotorflügel (6) sich in Bezug auf den Rotor (4) nicht bewegen, wodurch der Spalt (24) ein fester Spalt ist unabhängig von der Drehgeschwindigkeit des Rotors (4), die Rotorflügel (6) sich in Längsrichtung des Rotors (4) erstrecken und unter beabstandeten Winkelabständen, und der Spalt (24), die Rotorflügel (6) und der feststehende Flügel (8) das Bruchglas (22) veranlassen, derart zu sein, dass es nicht schneidet, sicher zu handhaben ist und für weitere Verwendung ohne weitere Verarbeitung geeignet ist.

2. Vorrichtung (2) nach Anspruch 1, in der die Rotorflügel (6) unter 90° Winkelabstand beabstandet sind.

3. Vorrichtung (2) nach Anspruch 1 oder Anspruch 2, in der der feststehende Flügel (8) ein einstellbarer feststehender Flügel (8) zum Zwecke der Einstellung des Spaltes (24) zwischen den Rotorflügeln (6) und dem festen Flügel (8) ist, um die Größe des Bruchglases zu verändern.

4. Vorrichtung (2) nach irgendeinem der vorhergehenden Ansprüche, in der der Rotor (4) bei 1.550 Drehungen pro Minute gedreht wird.

5. Vorrichtung (2) nach irgendeinem der vorhergehenden Ansprüche, in der die Zuführgeschwindigkeit 3 m/s beträgt.

6. Vorrichtung (2) nach irgendeinem der vorhergehenden Ansprüche, und aufweisend Rückhaltedichtungen (36) um Staub in der Kammer (16) zurückzuhalten.

7. Vorrichtung (2) nach irgendeinem der vorhergehenden Ansprüche, und aufweisend Antriebseinrichtungen (38) für den Rotor (4).

8. Vorrichtung (2) nach irgendeinem der vorhergehenden Ansprüche, und aufweisend eine Zuführrutsche (26) längs derer das Glas oder keramische Material (18) entlanggeht zur korrekten Darbietung an den Rotor (4).

9. Vorrichtung (2) nach irgendeinem der vorhergehenden Ansprüche, und aufweisend Rückführungseinrichtungen (100) um gradiertes Bruchglas (22) einer gewissen Teilchengröße zurückzuführen um es in Bruchglas (22) einer kleineren Teilchengröße wieder zu verarbeiten.

10. Vorrichtung (2) nach irgendeinem der vorhergehenden Ansprüche, und aufweisend eine Vorbrecheinrichtung um große Teile an Glas oder keramischem Material (18) zu zerbrechen, bevor das Glas oder keramische Material (18) in den Rest der Vorrichtung (2) zum Zerbrechen eingeführt wird.

11. Vorrichtung (2) nach irgendeinem der vorhergehenden Ansprüche, und aufweisend einen reinigenden festen Flügel (54), der wirkt, um die Rotorflügel (6) mit einer schabenden Betätigung zu reinigen während sich der Rotor (4) dreht.

## Revendications

1. Machine (2) à broyer du verre ou de la céramique, laquelle machine (2) comprend un rotor (4), des lames de rotor (6) qui sont fixées au rotor (4), au moins une lame stationnaire (8) qui coopère, en service, avec les lames de rotor (6) quand le rotor (4) est en rotation, une chambre (16) pour recevoir du verre ou de la céramique broyé (18), et un moyen d'alimentation (88) pour amener le verre ou la céramique (18) jusqu'au rotor (4), la machine (2) étant telle que le rotor (4) est en amont de la chambre (16), la machine (2) étant telle que, en service, le rotor (4) tourne à 1200 - 2800 tours par minute, le moyen d'alimentation (88) amène le verre ou la céramique (18) jusqu'au rotor (4) à une vitesse d'alimentation de 3 - 75 mètres par seconde, le moyen d'alimentation (88) amène le verre ou la céramique (18) jusqu'au rotor (4) de telle sorte que le verre ou la céramique (18) tombe sur les lames du rotor (6) quand les lames du rotor (6) vont vers le haut en direction du verre ou de la céramique (18) qui tombe, moyennant quoi le verre ou la céramique (18) est broyé en fragments (20) au moment de l'impact avec les lames de rotor (6), les fragments (20) sont réduits en taille et transformés en calcin (22) en passant par un espace (24) entre les lames de rotor (6) et la lame stationnaire (8), les lames de rotor (6) sont fixées au rotor (4) de telle manière que les lames de rotor (6) ne bougent pas par rapport au rotor (4), l'espace (24) étant un espace fixe quelque soit la vitesse de rotation du rotor (4), les lames de rotor (6) s'étendent dans le sens de la longueur du rotor (4) et à des intervalles angulaires espacés, et l'espace (24), les lames de rotor (6) et la lame stationnaire (8) font en sorte que le calcin (22) ne coupe pas, soit d'une manipulation sûre et soit approprié à un usage ultérieur sans traitement ultérieur.

2. Machine (2) selon la revendication 1, dans laquelle les lames de rotor (6) sont espacées les unes des autres à intervalles angulaires de 90°.

3. Machine (2) selon la revendication 1 ou la revendication 2, dans laquelle la lame stationnaire (8) est une lame stationnaire ajustable (8) dans le but d'ajuster l'espace (24) entre les lames de rotor (6) et la lame stationnaire (8) afin de varier la taille du calcin (22).

4. Machine (2) selon l'une quelconque des revendications précédentes, dans laquelle le rotor (4) est mis en rotation à 1550 tours par minute.

5. Machine (2) selon l'une quelconque des revendications précédentes, dans laquelle la vitesse d'alimentation est de 3 mètres par seconde.

6. Machine (2) selon l'une quelconque des revendications précédentes et comprenant des joints de rétention (36) pour retenir la poussière dans la chambre (16).

7. Machine (2) selon l'une quelconque des revendications précédentes et comprenant un moyen d'entraînement (38) pour le rotor (4).

8. Machine (2) selon l'une quelconque des revendications précédentes et comprenant une goulotte d'alimentation (26) le long de laquelle le verre ou la céramique (18) passe pour se présenter correctement au rotor (4).

9. Machine (2) selon l'une quelconque des revendications précédentes et comprenant un moyen de remise en circulation (100) pour remettre en circulation du calcin calibré (22) d'une certaine taille de particule pour le retraiter en calcin (22) d'une taille de particule plus petite.

10. Machine (2) selon l'une quelconque des revendications précédentes et comprenant un dispositif de préfragmentation de grandes pièces de verre ou de céramique (18) avant que le verre ou la céramique (18) soit introduit dans le reste de la machine (2) pour y être broyé.

11. Machine (2) selon l'une quelconque des revendications précédentes et comprenant une lame stationnaire de nettoyage (54) qui a pour fonction de nettoyer les lames de rotor (6) par une action de grattage quand le rotor (4) est en rotation.
